# EUROPEAN PATENT SPECIFICATION

(11) **EP 0 910 058 B1**
(45) Date of publication and mention of the grant of the patent: **06.02.2002**
(21) Application number: 97117765.4
(22) Date of filing: 14.10.1997
(51) Int. Cl.: G09F 3/10, G09F 3/04, B29C 45/14

(54) **Recyclable label**
Recyclierbares Etikett
Etiquette recyclable

(43) Date of publication of application: 21.04.1999
(73) Proprietor: MINNESOTA MINING AND MANUFACTURING COMPANY, St. Paul, Minnesota 55133-3427 (US)
(72) Inventor: Nguyen, Quoc Hiep c/o Minnesota Mining & Manuf Co, St.Paul Minnesota 55 144-1000 (US)
(74) Representative: Wilhelm, Stefan

(56) References cited:
- EP-A- 0 101 215
- DE-C- 4 322 145
- VASSELLE J. B.: "Décoration dans le moule : Un aperçu des principaux procédés" PLASTIQUES MODERNES ET ELASTOMERES, vol. 47, no. 5, June 1995, pages 67-69, XP002058710

## Description

### Field of the invention

The present invention refers to recyclable labels comprising a printable backing having an outside printable surface and an inside surface. The invention furthermore refers to methods for labeling an optionally shaped plastic body in a way so that the labeled plastic body is recyclable without requiring removal of the label prior to recycling. The present invention furthermore refers to recyclable labeled optionally shaped plastic bodies and to the use of the above methods for marking plastic parts of household equipment, business machines, electronic entertainment devices and plastic parts used in the automotive industry, in the aircraft industry and in the shipbuilding industry.

### Background of the invention

Printable instruction, warning or identification labels are widely used, for example, on industrial and household equipment and in the transportation industry and more specifically, on business machine housings, telecommunication equipment housings, tooling equipment housings or dashboards or plastic substrates used in automobiles. The plastic parts may be prepared from a variety of polymeric materials such as acrylonitrile-butadiene-styrene terpolymer (ABS), polycarbonates (PC), polysytrenes (PS) or blends thereof. The labels typically comprise a backing having a printable exposed surface and an inside surface bearing a pressure sensitive adhesive layer to adhere the labels to the respective substrate.

Because of environmental concerns it has become increasingly important in recent years to recycle plastic housings and other plastic substrates. It was found that labels comprising backings based on polyvinylchloride (PVC), polyolefins or polyesters often have to be removed from the respective substrate they are attached to, prior to the recycling process, because of an insufficient compatibility of the backing material with the material of the substrate. In JP 8-67,857 it is disclosed that labels comprising an ABS backing can be recycled together with ABS substrates they are attached to.

Labels comprising a backing which is based on ABS, exhibit, however, an insufficient weatherability and UV stability so that their usefulness for outdoor applications is limited.

It was therefore an object of the present invention to provide a recyclable label comprising a printable backing, such labels being suitable for outdoor applications and being recyclable together with various plastic substrates they may be attached to without having to remove them prior to the recycling process. It was another object of the present invention to provide methods for manufacturing recyclable labeled optionally shaped plastic bodies. Other objects of the present invention are evident from the subsequent detailed specification.

### Brief description of the invention

The invention refers to a recyclable labeled optionally shaped plastic body having an exposed plastic surface bearing one or more labels, said plastic body being based on polymers comprising at least 50 % by weight of one or more polymers selected from the group comprising styrene containing polymers, polycarbonate and blends thereof, said label comprising a backing layer having an outside printable surface and an inside surface which is optionally surface-treated andlor optionally bears a primer, said backing layer comprising an acrylonitriile (ethylene-propylene-diene)-styrene terpolymer or an acrylonitrile-styrene-acrylate terpolymer, wherein the mass of the label with respect to the mass of the optionally shaped plastic body is less than 2 wt. %.

The invention furthermore refers to a method of preparing a recyclable labeled optionally shaped plastic body according to any of claims 1 - 5, said method comprising placing said label in a mold with its outside surface contacting the inside surface of the mold, and molding a plastic material into the mold, and to a method of preparing a recyclable labeled optionally shaped plastic body according to any of claims 2 - 5 wherein said label is adhered through the pressure-sensitive adhesive layer to an exposed surface of said optionally shaped plastic body.

The invention also refers to the use of of the recyclable labeled optionally shaped plastic body according to any of claims 1 - 5 in the industrial and household equipment and in the transportation industry.

### Detailed description of the invention

The term "label" as used above and below denotes a spatially limited section of a polymeric film comprising no pressure-sensitive adhesive or a composite film comprising several layers including a pressure-sensitive adhesive layer. The label can be obtained from such polymeric film or composite film by converting using conventional techniques such as, for example, die-cutting. The label exhibits an exposed printable surface and can be attached to various substrates to deliver, for example, an instruction, warning or identification message. A label covers only part of the surface of the substrate and the ratio of the mass of the label with respect to the mass of the substrate is typically less than 2% by weight and preferably less than 1% by weight.

The term "recyclable label" as used above and below refers to a combination of the label with an appropriately selected plastic material so that a labeled optionally shaped plastic body made from such plastic material and bearing such a label, is recyclable without requiring prior removal of such label.

The term "optionally shaped plastic body" refers to a plastic substrate or a substrate having at least one plastic part which can be separated from the other parts of the substrate, for example, mechanically, thermally or chemically.

The term "recyclable labeled optionally shaped plastic body" is an optionally shaped plastic body having an exposed plastic surface bearing one or more labels. The plastic body, i.e., the plastic substrate or the separate plastic part of a substrate, is prepared by using a plastic material. When observing a decrease of less than 10% and, in particular, of less than 5% or an increase, respectively, in at least three and preferably all four of the following properties
- impact strength (IZOD impact strength and/or notched impact strength)
- melt-flow index
- tensile strength and/or stress at break
- Vicat A dimensional stability
when comparing the recyclate, i.e., the plastic material obtained by recycling the labeled plastic body (without adding any original plastic material) with the original, non-recycled plastic material, a plastic body is denoted as recyclable. The recyclate preferably also exhibits no color change when compared to the original plastic material, and no mechanical imperfections such as voids or bubbles.

The methods for measuring these properties are described in detail in the test section below.

A first embodiment of a recyclable label according to the present invention can be obtained by converting from a composite film comprising a backing layer having an outside printable surface and an inside surface which is optionally chemically primed or corona-treated, and a pressure sensitive adhesive layer. The backing layer is a polymeric film comprising acrylatestyrene-acrylonitrile terpolymer (ASA) or acrylonitrile-(ethylene-propylene-diene)-styrene terpolymer (AES) or blends thereof. This label comprising a pressure sensitive adhesive can be applied to various substrates including but not limited to optionally shaped plastic bodies.

In an alternative embodiment a recyclable label according to the present invention is obtained by converting the backing layer The label is then placed into a mold and the plastic material is introduced into the mold to provide the labeled plastic body according to the invention The recyclable label comprising no pressure sensitive adhesive layer can essentially be applied to molded plastic bodies during the molding step.

JP 09-122,221 discloses a composite film comprising an ASA backing layer and an adhesive layer such as styrene-isoprene-styrene, natural rubber and/or acrylic compounds containing a pharmacologically effective ingredient. The composite film is, however, used as a skin adhesive sheet. A similar skin adhesive sheet is disclosed in JP 09-124,464 which differs from the sheet described in JP 09-122,221 in that a thin polyethylene terephthalate layer is included between the ASA backing layer and the adhesive layer US 5,334,450 describes a weatherable film having a three layer structure, for lamination to a non-weatherable substrate. The outside layer comprises a polymer selected from a group of styrene-containing polymers such as AES, ASA and SAN (styrene acrylonitrile) which may be blended with PVC, CPE (chlorinated polyethylene), aliphatic polyurethanes or saturated styrenic block copolymers. The second or intermediate layer which comprises a polymer selected from a broad group of polymers is followed by a third layer comprising a non-pressure sensitive adhesive. The films are suggested as weatherable film coatings for construction materials. Recycling of the composite film as such is mentioned but it is stated that recycling the film scrap back into the weatherable layer will result in a "less than prime" blend which will have reduced weatherability. A composite film similar to that of US 5,334,450 is disclosed in US 5,306,548.

None of the cited references mentions label applications or recognizes that labels comprising an ASA and/or AES based backing layer, exhibit advantageous properties and are, in particular, suitable for outdoor applications and recyclable with various plastic materials including but not limited to PC, styrene-containing polymers such as ABS, PS (polystyrene), SAN, saturated styrenic block copolymers, AES and ASA, and blends thereof.

ASA and AES polymers used in the backing layer are known and they can basically be prepared by copolymerizing styrene and acrylonitrile in the presence of an acrylic elastomer in the case of ASA or of ethylene-propylene-diene monomer rubber (EPDM) in the case of AES, respectively. The preparation of ASA is described in some detail, for example, in DE 28 26 925, US 3,944,631 and Kunststoffe, 60 (September 1970), pp. 617-622. AES polymers and their preparation are described in some detail in DE 2830 232 and JP 79-083,088

Especially preferred are ASA and AES polymers, respectively, wherein the content of the acrylic elastomer in the case of ASA or the EPDM rubber in the case of AES, respectively, amounts from about 5 to about 40 percent by weight, more preferably from about 10 to about 30 percent by weight, respectively, with respect to the mass of the ASA or AES polymer, respectively.

AES polymers which are suitable in the present invention, include ROVEL™ materials which are available from Dow Chemical Company, Midland, MI, U.S.A.. ASA polymers which are suitable in the present invention, include Geloy™ materials which are available from General Electric Corporation and Centrex™ materials which are available from Monsanto Corporation. ASA films are also available from Vereinigte Kunststoffwerke GmbH, Staufen, Germany.

AES and/or ASA based polymers used in the preparation of the backing layer preferably comprise at least 60%, more preferably at least 70% and especially preferably at least 75% of AES and/or ASA. The AES and/or ASA based polymers can be blended with other polymers such as, for example, polycarbonates and styrene-containing polymers other than AES and ASA such as ABS, polystyrene (PS) or saturated styrenic block copolymers.

Especially preferred are ASA based polymers. The ratio of the mass(es) of AES and/or other polymers with respect to the mass of ASA preferably is between 0 and 2 and more preferably between 0 and 0.5. Especially preferred are polymers with a ratio of the mass (es) of AES and/or other polymers with respect to the mass of ASA of between 0 and 0.25.

The backing layer may optionally comprise further components in addition to the AES and/or ASA based polymer. Such additional components may include, for example, colorants, ultraviolet (UV) stabilizers such as, for example, 2-(2'-hydroxy-5'-methylphenyl)benzenetriazole commercially available from American Cyanamid Company, Wayne, N.J., U S.A, or Ciba-Geigy AG, Basel, Switzerland, or HALS compounds (hindered amine light stabilizer) commercially available from Ciba-Geigy AG, Basel, Switzerland, as Tinuvin (TM) or Chimassorb (TM) materials, thermal stabilizers, fillers, antiblock agents, antioxidants, processing aids, lubricants, impact modifiers, pigments, gloss-reducing agents such as inorganic particles like talc or silicon dioxide, reinforcing agents and other additives. The amount of the additives preferably is lower than 25 weight percent and preferably from about 0.05 weight percent to about 20 weight percent with respect to the mass of the backing layer.

The thickness of the backing layer used in the labels of the present invention preferably is between 15 - 200 µm and more preferably between 20 - 100 µm.

The backing layer suitable in the present invention may be prepared by a number of well-known techniques. The polymer component or compounds used in the preparation of the backing layer are blended, optionally in the presence of solvents, and the optional further components or additives are incorporated. The backing layer is then obtained, for example, by extrusion, calendering or solvent casting. Details on calendering which is preferred, can be found, for example, in the Encyclopedia of Polymer Science and Engineering, 2nd ed., 1985, vol.6, 571-631. The extrusion technique is described in some detail in the Encyclopedia of Polymer Science and Engineering, 2nd ed., 1985, vol. 6, pp. 606-622.

The pressure sensitive adhesive layer which may optionally be attached to the inside surface of the backing layer in the first embodiment of a recyclable label, can comprise various pressure sensitive adhesives including but not limited to rubber based pressure sensitive adhesives or acrylic adhesives. Rubber-based pressure sensitive adhesives and their preparation is described, for example, in the Handbook of Pressure Sensitive Adhesive Technology, 2nd ed., ed. D. Satas, 1989, New York, pp 260-373. Acrylic adhesives which are preferred are described in the Handbook of Pressure Sensitive Adhesive Technology, 2nd ed., ed. D. Satas, 1989, New York, pp.396-456.

Pressure-sensitive adhesives can be removable or permanent whereby the behaviour depends both on the nature of the pressure sensitive adhesive layer adhesive and the properties of the surface it is attached to. Recyclable labels comprising a removable pressure sensitive adhesive can be readily removed from the respective surface without using, for example, mechanical tools such as a razor blade or solvents, and without leaving any residue on the surface.

The pressure sensitive adhesive used in the recyclable labels of the present invention preferably is removable to allow for initial repositioning when applying the label, and for easy replacing of the label during the lifetime of the respective product. It has been found that the pressure sensitive adhesive used in the present invention preferably exhibits a 180° peel adhesion after 3 days dwell time at room temperature on stainless steel as measured according to DIN 30646 (peel rate 300 mm/min) of less than 10 N/1.27 cm and more preferably of between 0.8 and 7 5 N/1.27 cm.

The pressure sensitive adhesive layer preferably has a thickness of between 10 and 50 µm and more preferably of between 6 and 30 µm. The pressure sensitive adhesive layer can be attached to the backing layer by lamination of a pressure sensitive adhesive transfer film, i.e., a carrier-free adhesive film which is typically stored between two release liners. One of the release liners is removed first and the exposed adhesive layer is attached to the backing layer, followed, for example, by passing over of a roller. The second release liner would then only be removed prior to adhering the label to a substrate.

It is also possible to coat the pressure sensitive adhesive layer onto the backing layer as an organic or aqueous solution or dispersion with subsequent evaporation of the solvent and optional curing, or as a solvent-free, prepolymerized syrup with subsequent curing. The pressure sensitive adhesive layer is usually protected by a release liner. Suitable release liners comprise carrier films or layers which may be selected from a group comprising high-density papers such as glassine paper, clay-coated paper, Kraft paper, polymer-laminated paper such as polyethylene-laminated wood-free paper and polymeric films, said carrier films being treated with release agents such as fluorine-containing resins or silicone resins. Alternatively, it is also possible to apply a printable low-adhesion backsize coating as is described, for example, in US 5,496,635 to the outside surface of the backing layer. The composite film comprising the backing layer and the pressure sensitive adhesive layer, can then be rolled up for storage and no release liner is required.

Prior to the application of the pressure sensitive adhesive layer the inside surface of the backing layer may be optionally treated with chemical primers or corona treated in order to improve adhesion of the pressure sensitive adhesive layer to the backing. The so-called corona treatment is described in some detail in Deposition Technologies for Films and Coatings (Noyes, 1982), pp. 507-508. The corona treatment can be performed, for example, in air or in a nitrogen atmosphere. In case of nitrogen corona treatment the oxygen concentration preferably is 0.1-1% or less. The corona treatment improves the adhesion between the backing and the pressure sensitive adhesive layer quite generally for any pressure sensitive adhesive material and is less dependent on the chemical nature of the pressure sensitive adhesive material. Chemical primers are more specific to the chemical nature of the pressure sensitive adhesive material. Primer for acrylic based pressure sensitive adhesives are, for example, commercially available from 3M Company, St. Paul, U.S.A., as Scotch (TM) Tape Primer 83, Scotch-Mount (TM) Primer Y-122 and Y-4297 and Surface Preparation Adhesives for Stamark (TM) Pavement Marking P48, P50 and P55.

The chemical primer layer preferably has a thickness of between 1 and 10 µm and can be applied by various conventional techniques including spray-coating or casting.

It was found by the present inventor that the composite film used in the present invention comprising a backing layer, a pressure sensitive adhesive layer and, optionally, a primer layer between the backing layer and the pressure sensitive adhesive layer or a corona-treated inside surface of the backing layer, is particularly useful for the preparation of printable and recyclable labels. The labels can be obtained from the composite film using conventional converting techniques such as, for example, rotary or flat-bed die-cutting.

The ASA and/or AES based backing inherently exhibits an excellent printability. Information can be applied to the outside surface of the backing by conventional printing techniques such as, for example, thermal transfer printing, screen printing, flexo printing, offset printing, letter press or laser toner printing. If desired, the exposed surface can be protected after the printing step with protecting clear coats such as, for example, non PVC-containing polyester or polyacrylate based resins, styrene-containing polymers and/or PC. The clear coat, if present, preferably has a thickness of between 1 and 10 µm and, more preferably, of between 2 and 8 µm. Alternatively, a protective laminate may be applied to the printed backing. The laminate which typically is between 10 and 100 µm and more preferably between 25 and 50 µm thick, is preferably based on styrene-containing polymers and/or PC.

The recyclable labels comprising a pressure sensitive adhesive layer can be easily attached to various substrates by removing the protecting release liner, positioning the adhesive on the respective substrate and pressurizing it by hand.

Recyclable labels comprising no pressure sensitive adhesive layer are advantageously applied to molded plastic bodies during the molding step. The label is inserted into the mold with its outside surface contacting the inside surface of the molding cavity. If desired the label can be positioned in the mold by attaching the outside surface of the label to the inside surface of the molding cavity by means of a pressure sensitive adhesive. It is also possible that the molding cavity comprises a recess adapted to the size of the label in order to allow for mechanical positioning of the label. The inside surface of the recyclable label comprising no pressure sensitive adhesive layer may be corona-treated or bear a primer layer, if desired, in order to enhance adherence between the label and the molded plastic material of the plastic body. The plastic material is molded into the cavity using conventional molding techniques such as injection molding, which is described in some detail in Polymeric Materials and Processing, J.M. Charrien (Hanser, 1990), pp. 466-490. The labels are preferably printed prior to their insertion into the mold but they can also be printed after the molding step. The backing layer used for the preparation of the recyclable labels comprising no pressure sensitive adhesive layer, preferably exhibits a heat deflection temperature at 455 kPa of 95°C or more and more preferably of 100°C as measured according to ASTM D648. This is sufficient to maintain the integrity of the label during the molding of the plastic material, and the quality of the printing applied prior to the molding step, is usually not adversely affected.

It was found that the recyclable labels used in the present invention which may or may not comprise a pressure sensitive adhesive layer, can be recycled with various optionally shaped plastic bodies they are attached to without requiring prior removal of the label. The term "recyclable labeled optionally shaped plastic body" as used above and below, is defined by comparing the impact strength, the melt-flow index, the tensile strength and/or the stress at break and the Vicat A dimensional stability for the original, non-recycled plastic material on the one hand and for the recyclate on the other hand, i.e, the plastic material obtained when recycling the optionally shaped plastic body bearing one or more labels without adding any original, non-recycled plastic material.

In the industrial practice, the recyclate of the labeled optionally shaped plastic body is usually blended with a percentage of, for example, 15-50% by weight or more of the original, non-recycled plastic material, and the blend is used for the preparation of new optionally shaped plastic bodies. The blend ratio is selected and adjusted to provide the desired profile of properties of the blended material as compared to the properties of the original material.

The recycling step can be performed using conventional techniques including, for example, mechanical comminuting and re-melting Recycling techniques are described in some detail, for example, in Recycling-gerecht Konstruieren mit Kunststoffen, D. Wimmen (Hoppenstedt, 1992).

The ratio of the mass of the label comprising a pressure sensitive adhesive layer with respect to the mass of the labeled plastic body preferably is not more than 2% by weight, more preferably less than 1.0% by weight and especially preferably not more than 0 5% by weight. It was surprisingly found that the nature of the pressure sensitive adhesive if present is less critical, and that a wide variety of pressure sensitive adhesives including rubber-based, tackified pressure sensitive adhesives and, in particular, acrylic pressure sensitive adhesives can be used. The ratio of the mass of the pressure sensitive adhesive, if present, with respect to the mass of the labeled plastic body preferably is not more than 0.1% and more preferably less than 0 075%.

It was surprisingly found that the labels used in the present invention which may or may not comprise a pressure sensitive adhesive layer, can be recycled together with various optionally shaped plastic bodies they are applied to. The plastic materials used for the preparation of the plastic bodies are preferably based on polymers selected from the group comprising styrene-containing polymers such as ASA, AES, ABS, SAN, saturated styrenic block copolymers or PS, polycarbonates and blends thereof. The mass ratio of these preferred polymers with respect to the plastic material preferably is at least 50% by weight and more preferably at least 65% by weight. The plastic materials comprising one or more of the preferred polymers listed above may be blended with other polymers and optionally comprise further additives selected from a group comprising, for example, colorants, ultraviolet (UV) and thermal stabilizers, fillers, antiblock agents, antioxidants, processing aids, lubricants, impact modifiers, pigments, gloss-reducing agents such as inorganic particles like talc or silicon dioxide, reinforcing agents and other additives.

Plastic materials other than those enumerated above can be selected by screening polymers and recyclates obtained from said polymers using the method described in example 1 below or an equivalent method, thereby comparing the original polymer with the recyclates. This requires reasonable effort from the person skilled in the art only because of the excellent compatibility and recyclability of AES and/or ASA based polymers with various polymers.

The labels used in the present invention which may or may not comprise a pressure sensitive adhesive layer, are environmentally acceptable due to their recyclability and they furthermore exhibit advantageous weatherability properties including a high stability against oxidation.

The labels according to the present invention can therefore be used for a wide variety of applications including but not limited to marking of plastic bodies of, for example, industrial and household equipment and of plastic bodies used in the transportation industry. The recyclable labels of the present invention are especially useful for marking of household equipment, business machines, telecommunication equipment, electronic entertainment devices, and for applications in the automotive industry, aircraft industry and shipbuilding industry.

The invention will be further explained by the following examples. First, however, certain procedures and tests utilized in the examples, will be described.

### Test Methods

### Melt flow index (MFI) and melt volume index (MVI)

The melt flow index is determined according to DIN 53735. Approximately 3 to 6g of a sample of the non-recycled, original or of the recycled plastic material (recyclate), respectively, are placed in a temperature-conditioned metal cylinder. Via a cylindrical die, a specified force acts on the melted sample. The melt flow index (MFI) is the mass of the sample which flows through a standardized capillary (diameter 2.095 mm) within 10 minutes. The melt volume index (MVI) corresponds to the volume of the sample which flows through the standardized capillary within 10 minutes.

### Impact strength

The IZOD impact strength is measured according to ISO 180, method C using an 11 Joule pendulum according to DIN 51222. The IZOD impact strength given in kJ/m² and refers to the cross-sectional area of the respective sample.

The notched impact strength is measured according to ISO 180, method A using a sample exhibiting a notch (indentation radius of 0.25 mm) in the area of impact. The notched impact strength is given in kJ/m².

### Modulus of elasticity

The modulus of elasticity is measured according to DIN 53457 using a tensile testing machine according to DIN 51221. The sample is mounted into the tensile testing machine, and a tensile force is applied at a rate of 1 mm/min until an elongation of 0.25% is obtained. The modulus of elasticity is given in N/mm².

### Tensile strength and stress at break

The tensile strength and the stress at break are measured according to DIN 53455 using a tensile testing machine according to DIN 51221. The tensile force is applied at a rate of 50 mm/min. The tensile strength and the stress at break are given in N/mm².

### Vicat A dimensional stability

The Vicat A dimensional stability is measured according to DIN 53460/VST/B120 using a heating rate of 120 K/h.

### UV resistance

The sample is adhered to an aluminum plate with a pressure sensitive adhesive (Scotch (TM) pressure sensitive adhesive transfer tape no. 9458, available from 3M Company, St. Paul, U S A.) and placed in the UV-weathering chamber according to ASTM G 53-88. After 1000 hours the sample was qualitatively evaluated for changes in color, particularly yellowing of the film.

### Visual appearance test

An injection-molded sample (80 x 10 x 4 mm³) of the recyclate of a labeled optionally shaped plastic body is placed into a daylight box type 6020, simulated daylight type D65 which is commercially available from Byk Gardner Company, and visually inspected with respect to color changes and mechanical imperfections such as voids or bubbles. The sample is obtained according to ISO 3167 in a Battenfeld BA-200/5 CD injection molding machine using the parameters as specified in Example 1. The color of the sample of the recyclate is compared with the color of a corresponding sample of the original plastic material of the same dimensions and it is indicated in the below examples whether or not the recyclate samples exhibited a color change relative to the samples consisting of the original plastic material.

### List of materials

- Novodur (TM) P2H-AT, ABS-graft copolymer, commercially available from Bayer AG, Leverkusen, Germany
- Bayblend (TM) R-FR 390, polycarbonate and ABS blend recyclate, commercially available from Bayer AG, Leverkusen, Germany (the material obtained from the supplier - although being a blend recyclate - is termed below as original Bayblend material, and the recyclate comprising a mixture of the original Bayblend and the label in a ratio as specified, is termed below as recyclate)
- Styroblend (TM) PC 2065, polystyrene polymer, commercially available from BASF AG, Ludwigshafen, Germany
- Makrolon (TM) 6385 FB 90/042, polycarbonate, commercially available from Bayer AG, Leverkusen, Germany
- FU 85 F 5 (85.0), ASA film, thickness 80 µm, white, one side matte surface appearance, the other side gloss surface appearance, commercially available from Vereinigte Kunststoffwerke GmbH, Staufen, Germany
- ID 65 C8/M3, ABS film, thickness 80 µm, white, one side matte surface appearance, the other side gloss surface appearance, commercially available from Vereinigte Kunststoffwerke GmbH, Staufen, Germany
- Scotch (TM) transfer tape 9458, acrylate based transfer tape (thickness of adhesive layer: 25 4 µm) between siliconized paper release liners, commercially available from 3M Company, St. Paul, U.S.A.
- Surface Preparation Adhesive for Stamark (TM) pavement marking P48, primer solution, commercially available from 3M Company, St. Paul, U.S.A
- Scotch (TM) transfer tape 9449, acrylate based transfer tape comprising polymeric microspheres (thickness of adhesive layer: 25 µm) between siliconized paper release liners, commercially available from 3M Company, St. Paul, U.S.A.

### Examples

### Example 1

A composite film was obtained by laminating transfer tape 9458 onto the glossy, corona-treated side of ASA film FU 85 F 5 (85 0). A pattern was printed onto the exposed matte side of the ASA film, using thermal transfer printing ribbon ICS-CC-4099-1, commercially available from Identcode System AG, Neu-Anspach, Germany. The pattern covered about 50% of the exposed surface of the ASA film. A sample comprising 5g of the printed composite film (4 08g of the printed ASA film and 0.92g of the transfer tape 9458) was obtained, and its exposed pressure sensitive adhesive surfaces were folded onto each other so that the sample does not exhibit any sticky surface. The sample was then roughly comminuted and the comminuted parts were further comminuted and homogenized with about 3 kg of Novodur in a cutting mill under nitrogen. The resulting mixture was filled up to 5 kg by adding further Novodur, homogenized and extruded in an AVP 19 extruder available from AVP Chemischer Maschinenbau, Hannover, Germany (extrusion temperature 210-230°C, rotation speed 300 rpm)

The resulting material corresponds to a recycled material obtained when recycling a labeled plastic body comprising a label with an ASA backing (FU 85 F 5 (85.0)) and a pressure sensitive adhesive layer, and a Novodur body. The mass ratio of the label with respect to the labeled plastic body was 0.1%. This recycled material (termed below as Novodur/ASA-PSA (pressure sensitive adhesive) label recyclate (0.1%)) was compared with pure, unrecycled Novodur (termed below as original Novodur) by measuring the melt-volume index, the IZOD impact strength, the notched impact strength, the modulus of elasticity, the tensile strength, the stress at break and the Vicat A dimensional stability and assessing the visual appearance.

The samples used for the measurement of the above properties (with the exception of the melt-volume index and the Vicat A dimensional stability) of both the Novodur/label recyclate and the original Novodur were obtained by injection molding according to ISO 3167 in a Battenfeld BA 200/5 CD injection molding machine (injection pressure 950 bar, dwell pressure 450 bar, injection temperature 210-230°C, die temperature 230°C, cavity temperature 70°C).

The samples prepared had the following dimensions: 80 x 10 x 4 mm³.

The measurement results are summarized in Table 1.

### Example 2

Example 1 was repeated with the difference that Bayblend was used instead of Novodur. The recycled material is termed below as Bayblend/label recyclate (0.1%) and the pure, unrecycled Bayblend is denoted as original Bayblend. The recyclate was extruded in the AVP 19 extruder (extrusion temperature 220-230°C, 300 rpm).

The other conditions were chosen as in Example 1. The measurement results are summarized in Table 1.

### Example 3

Example 1 was repeated with the difference that Styroblend was used instead of Novodur. The recycled material is termed below as Styroblend/ASA-PSA label recyclate (0.1%) and the pure, unrecycled Styroblend is denoted as original Styroblend. The recyclate was extruded in the AVP 19 extruder (extrusion temperature 220-230°C, 300 rpm).

The other conditions were chosen as in Example 1. The measurement results are summarized in Table 1.

### Example 4

Example 1 was repeated with the difference that Makrolon was used instead of Novodur. The recycled material is termed below as Makrolon /ASA-PSA label recyclate (0.1%) and the pure, unrecycled Makrolon is denoted as original Makrolon. The recyclate was extruded in the AVP 19 extruder (extrusion temperature 260-280°C, 400 rpm). The injection temperature in the Battenfeld BA 200/5 CD injection molding machine was 270-300°C, the die temperature was 260°C.

The other conditions were chosen as in Example 1. The measurement results are summarized in Table 1.

### Example 5

Example 1 was repeated with the differences that
- the label only comprised the ASA film FU 85 F 5 (85.0) and no pressure sensitive adhesive layer, and
- the mass ratio of the ASA label with respect to the labeled Novodur plastic body was 0.5% by weight.

The recycled material is termed below as Novodur/ASA (0.5%).

The other conditions and parameters were chosen as in Example 1.

### Example 6

Example 1 was repeated with the differences that
- the label only comprised the ASA film FU 85 F 5 (85.0) and no pressure sensitive adhesive layer, and
- the mass ratio of the ASA label with respect to the labeled Novodur plastic body was 1.0% by weight.

The recycled material is termed below as Novodur/ABS (1.0%).

The other conditions and parameters were chosen as in Example 1.

### Example 7

Example 2 was repeated with the differences that
- the label only comprised the ASA film FU 85 F 5 (85 0) and no pressure sensitive adhesive layer, and
- the mass ratio of the ASA label with respect to the labeled Bayblend plastic body was 0 5% by weight.

The recycled material is termed below as Bayblend/ASA (0.5%).

The other conditions and parameters were chosen as in Example 1.

### Example 8

Example 2 was repeated with the differences that
- the label only comprised the ASA film FU 85 F 5 (85.0) and no pressure sensitive adhesive layer, and
- the mass ratio of the ASA label with respect to the labeled Bayblend plastic body was 1.0% by weight.

The recycled material is termed below as Bayblend/ASA (1.0%).

The other conditions and parameters were chosen as in Example 1.

### Example 9

Primer solution P48 was applied to the matte surface of ASA film FU 85 F 5 (85.0) and subsequently dried in a forced air oven. The thickness of the primer layer was approximately 5 µm. Then pressure sensitive adhesive transfer tape 9458 was laminated onto the primer layer and covered with a siliconized release liner.

The resulting composite film did not show any change in color after having been subjected to the UV resistance test described above.

### Example 10

A printable low-adhesion backsize coating was applied to the matte surface of the ASA film FU 85 F % (85.0) using the material and the method described in example 1 of US 5,496,635. Then the pressure sensitive adhesive transfer film 9458 was laminated onto the glossy surface of the ASA film. The resulting linerless composite film was rolled up into a roll for storage.

### Example 11

Example 1 was repeated with the difference that the glossy surface of the ASA film was the outside surface and that the matte side was treated with the P48 primer solution and subsequently dried in a forced air oven. The thickness of the primer layer was approximately 5 µm.

### Example 12

Example 1 was repeated with the difference that the matte surface of the ASA film was the outside surface and coated with a printable low-adhesion backsize coating as described in example 1 of US 5,496,635.

### Comparative Example 1

Example 9 was repeated with the difference that ABS film 65 C8/M3 was used instead of ASA film FU 85 F 5 (85.0). The primer layer and the adhesive layer were applied to the matte surface of the ABS film.

The resulting composite film showed yellowing after having been subjected to the UV resistance test described above.

### Example 13

A 5 x 5 mm label prepared from ASA film FU 85 F 5 (85.0) was placed in the mold used in example 1 to prepare samples with dimensions 80 x 10 x 4 mm. The ASA label contacted one of the long inside surfaces of the mold The temperature of the mold was 40°C. Bayblend was injected into the mold using a Battenfeld 6505 injection molding machine. The injection temperature was 210 - 230°C (± 5°C) and the injection pressure was 90 bar.

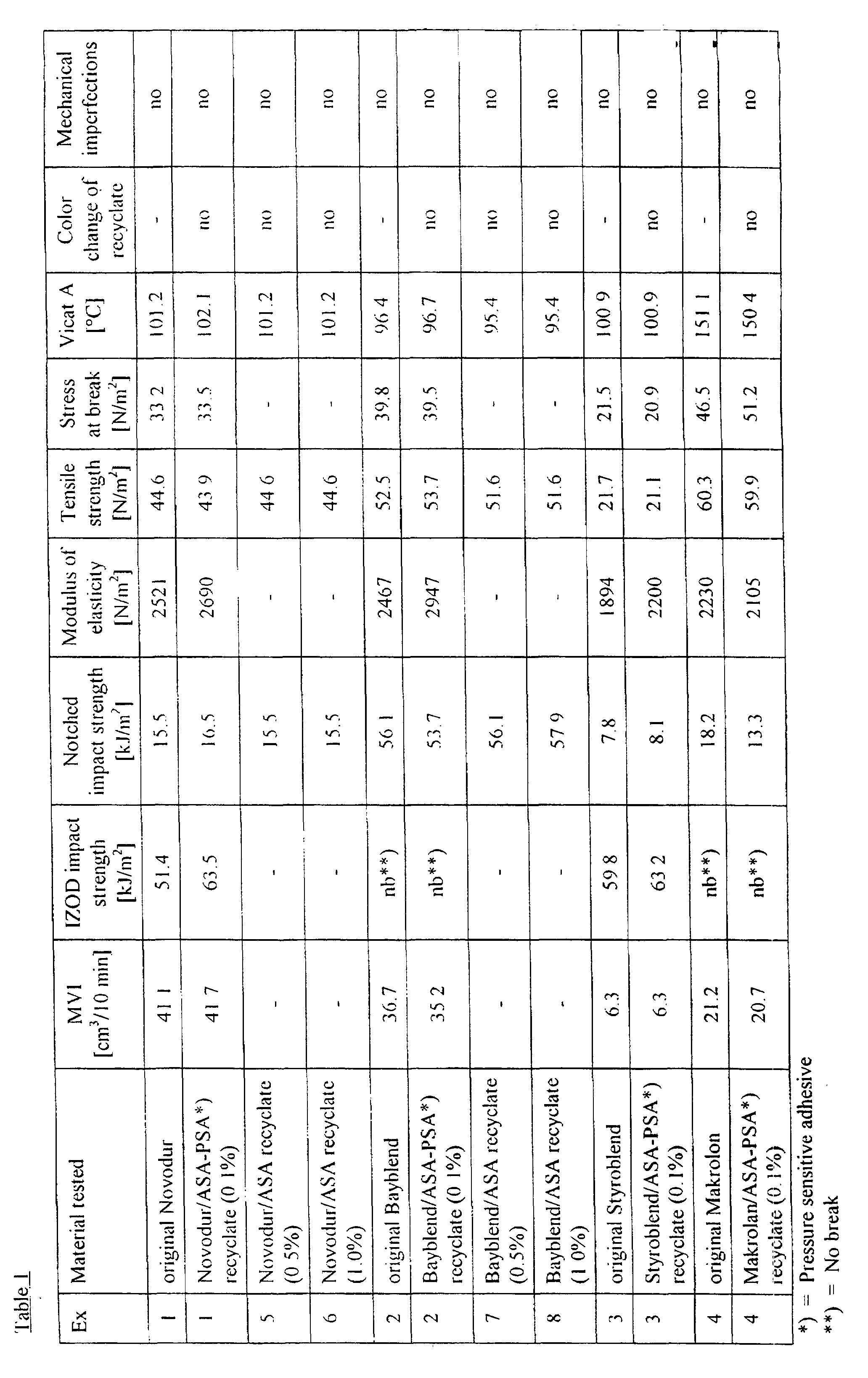

## Claims

1. Recyclable labeled optionally shaped plastic body having an exposed plastic surface bearing one or more labels, said plastic body being based on polymers comprising at least 50 % by weight of one or more polymers selected from the group comprising styrene containing polymers, polycarbonate and blends thereof, said label comprising a backing layer having an outside printable surface and an inside surface which is optionally surface-treated and/or optionally bears a primer, said backing layer comprising an acrylonitriile (ethylene-propylene-diene)-styrene terpolymer or an acrylonitrile-styrene-acrylate terpolymer, wherein the mass of the label with respect to the mass of the optionally shaped plastic body is less than 2 wt. %.

2. Recyclable labeled optionally shaped plastic body wherein the styrene containing-polymers are selected from a group comprising ASA, AES, ABS, SAN and saturated styrenic block copolymers.

3. A recyclable labeled optionally shaped plastic body according to claims 1 - 2 wherein said inside surface or said primer layer if present, bears a pressure-sensitive adhesive layer.

4. A recyclable labeled optionally shaped plastic body according to claim 3 wherein the pressure-sensitive adhesive exhibits a 180° peel adhesion after 3 days dwell time at room temperature on stainless steel of less than 10 N/1.27 cm.

5. A recyclable labeled optionally shaped plastic body according to any of claims 1-4 **characterized in that** the backing layer has a thickness of between 15 and 200 µm.

6. Method of preparing a recyclable labeled optionally shaped plastic body according to any of claims 1 - 5, said method comprising placing said label in a mold with its outside surface contacting the inside surface of the mold, and molding a plastic material into the mold.

7. Method of preparing a recyclable labeled optionally shaped plastic body according to any of claims 2 - 5 wherein said label is adhered through the pressure-sensitive adhesive layer to an exposed surface of said optionally shaped plastic body.

8. Use of the recyclable labeled optionally shaped plastic body according to any of claims 1 - 5 in the industrial and household equipment and in the transportation industry.

## Patentansprüche

1. Recyclierbarer, etikettierter, gegebenenfalls geformter Kunststoffkörper mit einer ein oder mehrere Etiketten tragenden freiliegenden Kunststoffoberfläche, wobei der Kunststoffkörper auf Polymeren basiert, die mindestens 50 Gew.-% eines oder mehrerer Polymere aus der Gruppe bestehend aus styrolhaltigen Polymeren, Polycarbonat und Mischungen davon enthalten, wobei das Etikett eine Trägerschicht mit einer bedruckbaren Außenfläche und einer gegebenenfalls oberflächenbehandelten und/oder gegebenenfalls einen Primer tragenden Innenfläche aufweist, wobei die Trägerschicht ein Acrylnitril-(Ethylen-Propylen-Dien)-Styrol-Terpolymer oder ein Acrylnitril-Styrol-Acrylat-Terpolymer enthält, bei dem die Masse des Etiketts, bezogen auf die Masse des gegebenenfalls geformten Kunststoffkörpers, weniger als 2 Gew.-% beträgt.

2. Recyclierbarer, etikettierter, gegebenenfalls geformter Kunststoffkörper, bei dem die styrolhaltigen Polymere aus der Gruppe bestehend aus ASA, AES, ABS, SAN und gesättigten Styrolblockcopolymeren stammen.

3. Recyclierbarer, etikettierter, gegebenenfalls geformter Kunststoffkörper nach Anspruch 1 oder 2, bei dem die Innenfläche oder die gegebenenfalls vorhandene Primerschicht eine Haftklebstoffschicht trägt.

4. Recyclierbarer, etikettierter, gegebenenfalls geformter Kunststoffkörper nach Anspruch 3, bei dem der Haftklebstoff eine 180°-Schälhaftung auf rostfreiem Stahl nach 3 Tagen Verweilzeit bei Raumtemperatur von weniger als 10 N/1,27 cm aufweist.

5. Recyclierbarer, etikettierter, gegebenenfalls geformter Kunststoffkörper nach einem der Ansprüche 1-4, **dadurch gekennzeichnet, daß** die Trägerschicht eine Dicke zwischen 15 und 200 µm aufweist.

6. Verfahren zur Herstellung eines recyclierbaren, etikettierten, gegebenenfalls geformten Kunststoffkörpers nach einem der Ansprüche 1-5, bei dem man das Etikett so in eine Form einbringt, daß seine Außenfläche mit der Innenfläche der Form in Berührung kommt, und ein Kunststoffmaterial in die Form einformt.

7. Verfahren zur Herstellung eines recyclierbaren, etikettierten, gegebenenfalls geformten Kunststoffkörpers nach einem der Ansprüche 2-5, bei dem man das Etikett über die Haftklebstoffschicht auf eine freiliegende Oberfläche des gegebenenfalls geformten Kunststoffkörpers aufklebt.

8. Verwendung des recyclierbaren, etikettierten, gegebenenfalls geformten Kunststoffkörpers nach einem der Ansprüche 1-5 in technischen Geräten und Haushaltsgeräten sowie in der Transportindustrie.

## Revendications

1. Corps en plastique recyclable, étiqueté, éventuellement profilé, comportant une surface en plastique exposée portant une ou plusieurs étiquettes, ledit corps en plastique étant à base de polymères comprenant au moins 50% en poids d'un ou plusieurs polymères choisis dans le groupe comprenant les polymères styréniques, le polycarbonate et leurs mélanges, ladite étiquette comprenant une couche de renfort comportant une surface extérieure imprimable et une surface intérieure qui est éventuellement traitée en surface et/ou qui porte éventuellement une couche primaire, ladite couche de renfort comprenant un terpolymère acrylonitrile-(éthylène-propylène-diène)-styrène ou un terpolymère acrylonitrile-styrène-acrylate, dans lequel la masse de l'étiquette par rapport à la masse du corps en plastique éventuellement profilé représente moins de 2% en poids.

2. Corps en plastique recyclable, étiqueté, éventuellement profilé, dans lequel les polymères styréniques sont choisis dans un groupe comprenant ASA, AES, ABS, SAN et les copolymères séquencés styréniques saturés.

3. Corps en plastique recyclable, étiqueté, éventuellement profilé, selon les revendications 1-2, dans lequel ladite surface intérieure ou ladite couche primaire, si elle est présente, porte une couche adhésive autocollante.

4. Corps en plastique recyclable, étiqueté, éventuellement profilé, selon la revendication 3, dans lequel l'adhésif autocollant présente une résistance au pelage à 180°, après 3 jours de repos à la température ambiante sur de l'acier inoxydable, de moins de 10 N/1,27 cm.

5. Corps en plastique recyclable, étiqueté, éventuellement profilé, selon l'une quelconque des revendications 1-4, **caractérisé en ce que** la couche de renfort a une épaisseur comprise entre 15 et 200 µm.

6. Procédé de préparation d'un corps en. plastique recyclable, étiqueté, éventuellement profilé, selon l'une quelconque des revendications 1-5, ledit procédé consistant à placer ladite étiquette dans un moule de manière que sa surface extérieure soit au contact de la surface intérieure du moule et à mouler une matière plastique dans le moule.

7. Procédé de préparation d'un corps en plastique recyclable, étiqueté, éventuellement profilé, selon l'une quelconque des revendications 2-5, dans lequel ladite étiquette est collée, par l'intermédiaire de la couche adhésive autocollante, à une surface exposée dudit corps en plastique éventuellement profilé.

8. Utilisation du corps en plastique recyclable, étiqueté, éventuellement profilé, selon l'une quelconque des revendications 1-5, dans l'équipement industriel et domestique et dans l'industrie des transports.
